# EUROPEAN PATENT SPECIFICATION

(11) **EP 3 127 933 B1**
(45) Date of publication and mention of the grant of the patent: **07.02.2018**
(21) Application number: 16182287.9
(22) Date of filing: 02.08.2016
(51) Int. Cl.: C08G 59/42, C08G 59/62, C08K 5/29

(54) **HEAT-CURABLE EPOXY RESIN COMPOSITION**
HÄRTBARE EPOXIDHARZZUSAMMENSETZUNG
COMPOSITION DE RÉSINE ÉPOXY THERMODURCISSABLE

(30) Priority: 04.08.2015 JP 2015153809
(43) Date of publication of application: 08.02.2017
(73) Proprietor: Shin-Etsu Chemical Co., Ltd., Chiyoda-ku, Tokyo 100-0004 (JP)
(72) Inventor: KUSHIHARA, Naoyuki, Annaka-shi, Gunma 379-0224 (JP); SUMITA, Kazuaki, Annaka-shi, Gunma 379-0224 (JP)
(74) Representative: Zacco GmbH

(56) References cited:
- EP-A1- 2 360 208
- EP-A2- 0 397 396

## Description

### [Technical field]

The present invention relates to a heat-curable epoxy resin composition.

### [Background art]

In recent years, electronic devices such as mobile phones, smartphones, ultrathin liquid crystal or plasma TVs and light laptop computers have been downsized in a growing manner. Electronic parts used in these electronic devices have, for example, been highly densely integrated or even packaged in a growing manner as well. Further, it is required that a resin material used in these electronic parts be low-expansion for the sake of a thermal stress that occurs at the time of manufacture and use. Furthermore, since these electronic parts will generate larger amounts of heat as they become highly integrated, it is required that the resin material also have a heat resistance.

Conventionally, cyanic ester resins are superior in heat resistance and are known as heat-curable resins with low electric permittivities and low dielectric losses. However, while a cured product employing a novolac-type cyanic ester resin described in Japanese Unexamined Patent Application Publication No. Hei 11-124433 is superior in thermal expansion, the cured product may exhibit a high water absorption rate and an impaired moisture absorbability and heat resistance.

As a resin composition capable of forming a cured product superior in mechanical strength, adhesion strength to an adherend, film-forming property, heat resistance and pressure resistance, Patent document 2 discloses a resin composition containing a polyamideimide resin (VYLOMAX HR16NN by Toyobo Co., Ltd.), diphenylethane bismaleimide (BMI-70 by K-I Chemical Industry Co., LTD.) and an allylphenol resin (MEH-8000H by Showa Kasei Kogyo Co., Ltd.). Since this resin composition employs a thermoplastic high-molecular-weight polyamideimide resin, the resin composition has a poor low-temperature meltability, and has a poor compatibility with a maleimide compound. Therefore, phase separation may occur at the time of curing a coating film of such resin composition, which makes it difficult to obtain an uniform coating film. Further, since there is used a high-boiling solvent such as NMP or the like, there exists a problem that the solvent will remain at B-stage.

Patent document 3 discloses a method of restricting the occurrence of free isocyanates and improving hydrolysis resistance of an annular carbodiimide compound, by adding the carbodiimide compound to a polylactic acid so as to block the terminal(s) of the carbodiimide compound.

Patent document 4 discloses a resin composition with an improved heat resistance and curability as a result of introducing a carboxyl group(s) as a curing agent. However, there exists a problem that a moisture resistance of a resin will be impaired, and a pot life will be adversely affected, as a result of adding a compound having carboxyl groups.

EP0397396 discloses a resin composition comprising an epoxy compound, a polymaleimide and a phenolic curing agent.

### [prior art document]

### [Patent document]

[Patent document 1] JP-A-H11-124433
[Patent document 2] JP-A-2004-168894
[Patent document 3] JP-A-2010-285557
[Patent document 4] JP-A-2003-261651

### [Summary of the invention]

### [Problem to be solved by the invention]

Therefore, it is an object of the present invention to provide a curable epoxy resin composition having a superior workability and capable of forming a cured product with a thermal expansion resistance, a heat resistance, an adhesiveness and a low water absorbability.

### [Means to solve the problem]

The inventors of the present invention diligently conducted a series of studies to solve the aforementioned problems, and completed the invention as follows. That is, the inventors found that the following heat-curable epoxy resin composition containing an epoxy resin, a carboxyl group-free curing agent and an annular carbodiimide compound had a superior workability and was capable of forming a cured product with a thermal expansion resistance, a heat resistance, an adhesiveness and a low water absorbability.

In short, the present invention is to provide the following heat-curable epoxy resin composition.

[1] A heat-curable epoxy resin composition comprising:
   (A) an epoxy resin;
   (B) a carboxyl group-free curing agent; and
   (C) an annular carbodiimide compound, wherein an equivalent ratio of the carboxyl group-free curing agent (B) to the epoxy resin (A) is 0.5 to 1.5, and the annular carbodiimide compound (C) is in an amount of 2 to 50 parts by mass with respect to a total of 100 parts by mass of the epoxy resin (A) and the carboxyl group-free curing agent (B).
[2] The heat-curable epoxy resin composition according to [1], wherein the component (B) is a phenol-based curing agent.
[3] The heat-curable epoxy resin composition according to [1] or [2], further comprising a curing accelerator (D).
[4] The heat-curable epoxy resin composition according to any one of [1] to [3], wherein the heat-curable epoxy resin composition is in liquid form.

### [Effects of the invention]

The heat-curable epoxy resin composition of the present invention has a superior workability, and is capable of forming a cured product with a thermal expansion resistance, a heat resistance, an adhesiveness and a low water absorbability. Thus, there are ensured a favorable workability and a long pot life.

### [Brief description of the drawings]

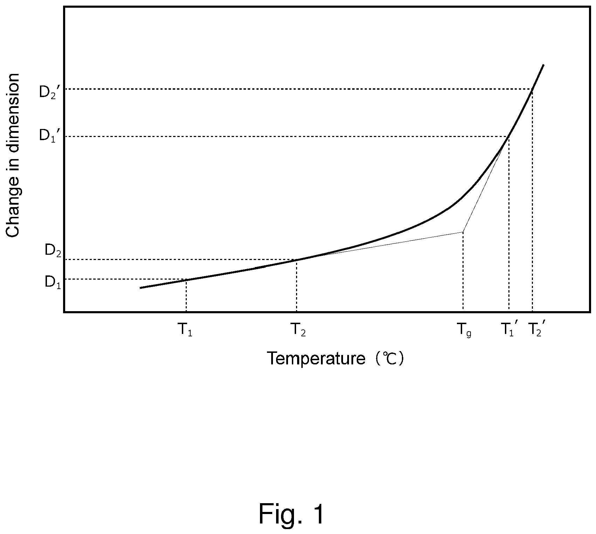

[FIG.1] is a diagram showing a method for determining a glass-transition temperature.

### [Mode for carrying out the invention]

The present invention is described in detail hereunder.

### (A) Epoxy resin

An epoxy resin as a component (A) of the present invention is a main component of the invention, and may be a known epoxy resin. Examples of such epoxy resin as the component (A) include a bisphenol A-type epoxy resin; a bisphenol F-type epoxy resin; a bisphenol S-type epoxy resin; a phenol novolac type epoxy resin; a cresol novolac type epoxy resin; a bisphenol A novo lac-type epoxy resin; a bisphenol F novolac-type epoxy resin; a stilbene type epoxy resin; a triazine skeleton-containing epoxy resin; a fluorene skeleton-containing epoxy resin; a triphenol alkane type epoxy resin; a biphenyl type epoxy resin; a xylylene type epoxy resin; a biphenyl aralkyl type epoxy resin; a naphthalene type epoxy resin; a dicyclopentadiene type epoxy resin; an alicyclic epoxy resin; multifunctional phenols; diglycidyl ether compounds of polycyclic aromatics such as anthracene; and a phosphorus-containing epoxy resin obtained by introducing an phosphorus compound into any of these epoxy materials. Each of these examples as the component (A) may be used singularly, or two or more of them may be used in combination.

It is preferred that the composition of the present invention contain the component (A) by an amount of 10 to 90% by mass, more preferably 20 to 80% by mass, or even more preferably 30 to 70% by mass.

### (B) Carboxyl group-free curing agent

There are no particular restrictions on a curing agent as a component (B) of the present invention, as long as the curing agent does not have a carboxyl group in each molecule. This curing agent is added to obtain a cured product with a three-dimensional crosslinked structure by reacting reactive functional groups (e.g. amino group, phenolic hydroxyl group and acid anhydride group) in the molecules of such curing agent and the epoxy groups in the epoxy resin as the component (A).

Examples of the curing agent as the component (B) include an amine-based curing agent, a phenol-based curing agent and an acid anhydride-based curing agent.

Examples of such amine-based curing agent include an aromatic diaminodiphenyl methane compound such as 3,3'-diethyl-4,4'-diaminodiphenyl methane, 3,3',5,5'-tetramethyl-4,4'-diaminodiphenyl methane and 3,3'5,5'-tetraethyl-4,4'-diaminodiphenyl methane; 2,4-diaminotoluene; 1,4-diaminobenzene; and 1,3-diaminobenzene. Each of these may be used singularly, or two or more of them may be used in combination.

It is preferred that a molar ratio of all the amino groups in the amine-based curing agent to all the epoxy groups in the component (A) be 0.7 to 1.2, more preferably 0.7 to 1.1, or even more preferably 0.85 to 1.05. When such molar ratio is smaller than 0.7, a remainder of unreacted epoxy groups in the cured product may cause a glass-transition temperature to decrease or an adhesion to be impaired. Further, when such molar ratio is larger than 1.2, the cured product will become hard and brittle, which forms cracks in the cured product at the time of performing reflow or being subjected to temperature cycles.

Examples of the above phenol-based curing agent include a phenol novolac resin; a naphthalene ring-containing phenolic resin; an aralkyl type phenolic resin; a triphenol alkane type phenolic resin; a biphenyl skeleton-containing aralkyl type phenolic resin; a biphenyl type phenolic resin; an alicyclic phenolic resin; a heterocyclic phenolic resin; a naphthalene ring-containing phenolic resin; a resorcinol-type phenolic resin; an allyl group-containing phenolic resin; and a bisphenol-type phenolic resin such as a bisphenol A-type resin and a bisphenol F-type resin. Each of these may be used singularly, or two or more of them may be used in combination.

If a phenolic resin is used as a curing agent, it is preferred that a molar ratio of the phenolic hydroxyl groups contained in such curing agent be 0.5 to 1.5, more preferably 0.8 to 1.2, with respect to 1 mol of the epoxy groups contained in the epoxy resin.

Examples of the above acid anhydride-based curing agent include 3,4-dimethyl-6-(2-methyl-1-propenyl)-1,2,3,6-tetrahydrophthalic anhydride; 1-isopropyl-4-methyl-bicyclo [2.2.2] oct-5-ene-2, 3-dicarboxylic acid anhydride; methyl tetrahydro phthalic anhydride; methyl hexahydro phthalic anhydride; hexahydro phthalic anhydride; methylhimic anhydride; pyromellitic dianhydride; allo-ocimene maleic anhydride; benzophenonetetracarboxylic dianhydride; 3,3',4,4'-biphenyl tetrabis benzophenonetetracarboxylic dianhydride; (3,4-dicarboxyphenyl) ether dianhydride; bis (3,4-dicarboxyphenyl) methane dianhydride; and 2,2-bis (3,4-dicarboxyphenyl) propane dianhydride. Each of these may be used singularly, or two or more of them may be used in combination.

If an acid anhydride-based curing agent is used, it is preferred that an equivalent ratio of the acid anhydride groups (-CO-O-CO-) in such curing agent to the epoxy groups in the epoxy resin (A) be 0.5 to 1.5. When such equivalent ratio is smaller than 0.5, a remainder of unreacted epoxy groups in the cured product may cause the glass-transition temperature to decrease and the adhesion to be impaired. When such equivalent ratio is larger than 1.5, the cured product may become brittle, which forms cracks in the cured product at the time of performing reflow or a temperature cycle test.

### (C) Annular carbodiimide compound

An annular carbodiimide compound as a component (C) of the present invention has at least one annular structure in each molecule, and has only one carbodiimide group in one annular structure. By adding such annular carbodiimide compound, there can be achieved function effects such as an improvement in heat resistance, a reduction in cure shrinkage, an improvement in adhesion to a base material and an improvement in toughness. The annular structure has one carbodiimide group (-N=C=N-) where the first nitrogen and second nitrogen atoms are bonded to each other by a linking group. It is preferred that the number of atoms in the annular structure be 8 to 50, more preferably 10 to 30, or even more preferably 10 to 20.

In this specification, the number of atoms in the annular structure refers to the number of atoms directly composing the annular structure. For example, if the structure is that of an 8-membered ring, the number of atoms is 8; and if the structure is that of a 50-membered ring, the number of atoms is 50. When the number of atoms in the annular structure is smaller than 8, a stability of the annular carbodiimide compound may be impaired in a way such that storage and usage of the same may become difficult. Moreover, although there are no particular restrictions on an upper limit of the number of ring members in terms of reactivity, it is difficult and costly to synthesize an annular carbodiimide compound with a number of atoms larger than 50. That is, it is preferred that the number of atoms in the annular structure be 10 to 30, more preferably 10 to 20.

The annular carbodiimide compound as the component (C) has a structure represented by the following formula (1).

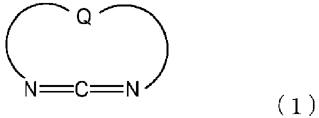

In formula (1), Q represents a divalent to tetravalent linking group such as an aliphatic hydrocarbon group, an alicyclic hydrocarbon group, an aromatic hydrocarbon group or a combination of these groups, each of which may also contain a hetero atom(s) and a substituent group(s). Specifically, such hetero atom(s) refer to O, N, S and P. Two valences among the valences of this linking group are used to form the annular structure. When Q is a trivalent or tetravalent linking group, it is bonded to a polymer or another annular structure through a single bond, a double bond, an atom and/or an atom group.

More specifically, the linking group (Q) represents a divalent to tetravalent aliphatic hydrocarbon group that has 1 to 20 carbon atoms and may also contain a hetero atom(s) and a substituent group(s); a divalent to tetravalent alicyclic hydrocarbon group that has 3 to 20 carbon atoms and may also contain a hetero atom(s) and a substituent group(s); a divalent to tetravalent aromatic hydrocarbon group that has 5 to 15 carbon atoms and may also contain a hetero atom(s) and a substituent group(s); or a combination of these groups. The linking group is selected from those having the number of carbon atoms required to form the annular structure described above. One example of combination is an alkylene-arylene group where an alkylene group is bonded to an arylene group.

It is preferred that the linking group (Q) be a divalent to tetravalent linking group represented by the following formula (1-1), (1-2) or (1-3).

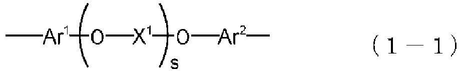

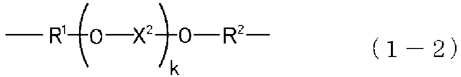

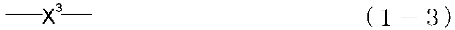

In formula (1-1), each of Ar¹ and Ar² independently represents a divalent to tetravalent aromatic hydrocarbon group that has 5 to 15 carbon atoms and may also contain a hetero atom(s) and a substituent group(s).

Examples of such aromatic hydrocarbon group include an arylene group having 5 to 15 carbon atoms, an arenetriyl group having 5 to 15 carbon atoms and an arenetetrayl group having 5 to 15 carbon atoms, each of which may also contain a hetero atom(s) and have a heterocyclic structure. Here, examples of such arylene group (divalent) include a phenylene group and a naphthalenediyl group; examples of such arenetriyl group (trivalent) include a benzenetriyl group and a naphthalenetriyl group; and examples of such arenetetrayl group (tetravalent) include a benzenetetrayl group and a naphthalenetetrayl group. These aromatic hydrocarbon groups may be substituted. Examples of a substituent group(s) include an alkyl group having 1 to 20 carbon atoms, an aryl group having 6 to 15 carbon atoms, a halogen atom, a nitro group, an amide group, a hydroxyl group, an ester group, an ether group and an aldehyde group.

As Ar¹ and Ar², preferred are a phenylene group, a naphthalenediyl group, a benzenetriyl group, a naphthalenetriyl group and a benzenetetrayl group, among which a phenylene group and a benzenetriyl group are particularly preferred.

In formula (1-2), each of R¹ and R² independently represents a divalent to tetravalent aliphatic hydrocarbon group having 1 to 20 carbon atoms, a divalent to tetravalent alicyclic hydrocarbon group having 3 to 20 carbon atoms or a combination of these groups, each of which may also contain a hetero atom(s) and a substituent group(s). Each of R¹ and R² in formula (1-2) may also represent a combination of at least one of the above aliphatic hydrocarbon group and alicyclic hydrocarbon group; and a divalent to tetravalent aromatic hydrocarbon group having 5 to 15 carbon atoms. In short, the aromatic hydrocarbon group cannot be used singularly as R¹ or R².

Examples of such aliphatic hydrocarbon group include an alkylene group having 1 to 20 carbon atoms, an alkanetriyl group having 1 to 20 atoms and an alkanetetrayl group having 1 to 20 carbon atoms. Examples of such alkylene group include a methylene group, an ethylene group, a propylene group, a butylene group, a pentylene group, a hexylene group, a heptylene group, an octylene group, a nonylene group, a decylene group, a dodecylene group and a hexadecylene group. Examples of such alkanetriyl group include a methanetriyl group, an ethanetriyl group, a propanetriyl group, a butanetriyl group, a pentanetriyl group, a hexanetriyl group, a heptanetriyl group, an octanetriyl group, a nonanetriyl group, a decanetriyl group, a dodecanetriyl group and a hexadecanetriyl group. Examples of such alkanetetrayl group include a methanetetrayl group, an ethanetetrayl group, a propanetetrayl group, a butanetetrayl group, a pentanetetrayl group, a hexanetetrayl group, a heptanetetrayl group, an octanetetrayl group, a nonanetetrayl group, a decanetetrayl group, a dodecanetetrayl group and a hexadecanetetrayl group. These aliphatic hydrocarbon groups may be substituted. Examples of a substituent group(s) include an alkyl group having 1 to 20 carbon atoms, an aryl group having 6 to 15 carbon atoms, a halogen atom, a nitro group, an amide group, a hydroxyl group, an ester group, an ether group and an aldehyde group.

Examples of the above alicyclic hydrocarbon group include a cycloalkylene group having 3 to 20 carbon atoms, a cycloalkanetriyl group having 3 to 20 carbon atoms and a cycloalkanetetrayl group having 3 to 20 carbon atoms. Examples of such cycloalkylene group include a cyclopropylene group, a cyclobutylene group, a cyclopentylene group, a cyclohexylene group, a cycloheptylene group, a cyclooctylene group, a cyclononylene group, a cyclodecylene group, a cyclododecylene group and a cyclohexadecylene group. Examples of such cycloalkanetriyl group include a cyclopropanetriyl group, a cyclobutanetriyl group, a cyclopentanetriyl group, a cyclohexanetriyl group, a cycloheptanetriyl group, a cyclooctanetriyl group, a cyclononanetriyl group, a cyclodecanetriyl group, a cyclododecanetriyl group and a cyclohexadecanetriyl group. Examples of such cycloalkanetetrayl group include a cyclopropanetetrayl group, a cyclobutanetetrayl group, a cyclopentanetetrayl group, a cyclohexanetetrayl group, a cycloheptanetetrayl group, a cyclooctanetetrayl group, a cyclononanetetrayl group, a cyclodecanetetrayl group, a cyclododecanetetrayl group and a cyclohexadecanetetrayl group. These alicyclic hydrocarbon groups may be substituted. Examples of a substituent group(s) include an alkyl group having 1 to 20 carbon atoms, an aryl group having 6 to 15 carbon atoms, a halogen atom, a nitro group, an amide group, a hydroxyl group, an ester group, an ether group and an aldehyde group.

Examples of the above aromatic hydrocarbon group include an arylene group having 5 to 15 carbon atoms, an arenetriyl group having 5 to 15 carbon atoms and an arenetetrayl group having 5 to 15 carbon atoms, each of which may also contain a hetero atom(s) and have a heterocyclic structure. Examples of such arylene group include a phenylene group and a naphthalenediyl group. Examples of such arenetriyl group (trivalent) include a benzenetriyl group and a naphthalenetriyl group. Examples of such arenetetrayl group (tetravalent) include a benzenetetrayl group and a naphthalenetetrayl group. These aromatic hydrocarbon groups may be substituted. Examples of a substituent group(s) include an alkyl group having 1 to 20 carbon atoms, an aryl group having 6 to 15 carbon atoms, a halogen atom, a nitro group, an amide group, a hydroxyl group, an ester group, an ether group and an aldehyde group.

As R¹ and R², preferred are a methyl group, an ethyl group, a vinyl group, a phenyl group and an ether group, among which a methyl group, a phenyl group and an ether group are more preferred.

In formulae (1-1) and (1-2), each of X¹ and X² independently represents a divalent to tetravalent aliphatic hydrocarbon group having 1 to 20 carbon atoms, a divalent to tetravalent alicyclic hydrocarbon group having 3 to 20 carbon atoms, a divalent to tetravalent aromatic hydrocarbon group having 5 to 15 carbon atoms or a combination of these groups, each of which may also contain a hetero atom(s) and a substituent group(s).

Examples of these aliphatic hydrocarbon group, alicyclic hydrocarbon group and aromatic hydrocarbon group may include those listed as the examples of the above R¹ and R². As X¹ and X², preferred are a methyl group, an ethyl group, a vinyl group and an ether group, among which a methyl group and an ether group are more preferred.

In formulae (1-1) and (1-2), each of s and k is preferably 0 to 10, more preferably 0 to 3, or even more preferably 0 to 1. When each of s and k is greater than 10, it will be difficult to synthesize the annular carbodiimide compound, and the cost will increase. Here, when s or k is not smaller than 2, X¹ or X² as a repeating unit may differ from an other X¹ or X²_{.}

In formula (1-3), X³ represents a divalent to tetravalent aliphatic hydrocarbon group having 1 to 20 carbon atoms, a divalent to tetravalent alicyclic hydrocarbon group having 3 to 20 carbon atoms, a divalent to tetravalent aromatic hydrocarbon group having 5 to 15 carbon atoms or combination of these groups, each of which may also contain a hetero atom(s) and a substituent group(s).

Examples of these aliphatic hydrocarbon group, alicyclic hydrocarbon group and aromatic hydrocarbon group may include those listed as the examples of the above R¹, R², X¹ and X². As X³, preferred are a methyl group, an ethyl group, a vinyl group and an ether group, among which a methyl group and an ether group are more preferred.

Further, each of Ar¹, Ar², R¹, R², X¹, X² and X³ may also have a hetero atom(s) selected from O, N, S and P atoms (provided that the N atom(s) exist as a nitro group(s) and/or an amide group(s), if the contained hetero atom(s) is N).

Further, when Q is a divalent linking group, each of Ar¹, Ar², R¹, R², X¹, X² and X³ is a divalent group. When Q is a trivalent linking group, one of Ar¹, Ar², R¹, R², X¹, X² and X³ is a trivalent group. When Q is a tetravalent linking group, one of Ar¹, Ar², R¹, R², X¹, X² and X³ is a tetravalent group; or two of them are trivalent groups.

The examples where Q is a trivalent or tetravalent linking group that is bonded to an other annular structure(s) having a carbodiimide group(s) include those where two or more annular structures represented by the formula (1) are bonded by a shared part selected from a group comprising a spirocyclic structure, a single bond, an alkylene group having 1 to 10 carbon atoms, an aromatic ring structure having 6 to 10 carbon atoms, and cycloalkane ring structure having 4 to 12 carbon atoms. The shared part has 1 to 15 carbon atoms, and preferably 1 to 12 carbon atoms, and the examples thereof are represented by the following formulae (2) to (5).

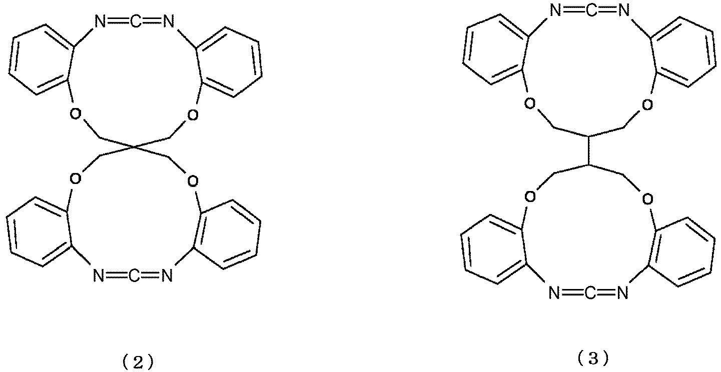

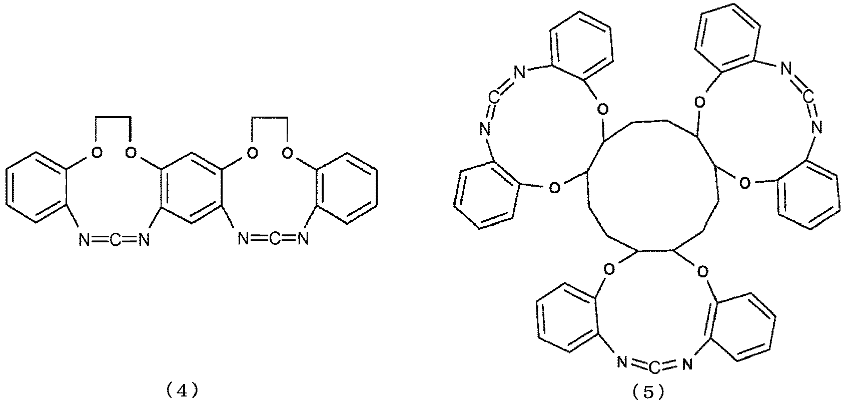

The annular carbodiimide compound as the component (C) is added in an amount of 2 to 50 parts by mass with respect to a total of 100 parts by mass of the epoxy resin as the component (A) and the carboxyl group-free curing agent as the component (B).

### (D) Curing accelerator

A curing accelerator as a component (D) of the present invention is used to accelerate a curing reaction between the epoxy resin and the curing agent. There are no particular restrictions on such curing accelerator, as long as it is capable of accelerating the curing reaction. Examples of such curing accelerator as the component (D) include a phosphorus compound such as triphenylphosphine, tributylphosphine, tri (p-methylphenyl) phosphine, tri (nonylphenyl) phosphine, triphenylphosphine-triphenylborane and tetraphenylphosphine-tetraphenylborate; a tertiary amine compound such as triethylamine, benzyldimethylamine, α-methylbenzyldimethylamine and 1,8-diazabicyclo [5.4.0] undecene-7; and an imidazole compound such as 2-methylimidazole, 2-ethyl-4-methylimidazole, 2-phenylimidazole and 2-phenyl-4-methylimidazole.

### (E) Other additives

The heat-curable resin composition of the present invention that does not contain a carboxyl group can be obtained by combining given amounts of the components (A) to (D). However, an other additive(s) as the component (E) may be added to the composition of the present invention if necessary, without impairing the objectives and effects of the invention. Examples of such additives include an inorganic filler, a mold release agent, a flame retardant, an ion trapping agent, an antioxidant, an adhesion imparting agent, a low stress agent, a coloring agent and a coupling agent.

The above inorganic filler is added to reduce a thermal expansion rate of and improve a moisture resistance reliability of the heat-curable resin composition that does not contain a carboxyl group. Examples of such inorganic filler include silicas such as a molten silica, a crystalline silica and cristobalite; alumina; silicon nitride; aluminum nitride; boron nitride; titanium oxide; glass fibers; and magnesium oxide. An average particle diameter and shape of these inorganic fillers may be selected in accordance with the intended use.

It is preferred that such inorganic filler be previously surface-treated with a coupling agent such as silane coupling agent and a titanate coupling agent, for the purpose of strengthening a bonding strength between the resin and this inorganic filler. Such coupling agent may be a silane coupling agent, and examples of such silane coupling agent include epoxy silanes such as γ-glycidoxypropyltrimethoxysilane, γ-glycidoxypropylmethyldiethoxysilane and β-(3,4-epoxycyclohexyl) ethyltrimethoxysilane; amino silanes such as N-β (aminoethyl)-γ-aminopropyltrimethoxysilane, a reactant of imidazole and γ-glycidoxypropyltrimethoxysilane, y-aminopropyltriethoxysilane and N-phenyl-γ-aminopropyltrimethoxysilane; and mercapto silanes such as γ-mercaptopropyltrimethoxysilane and γ- (thiiranylmethoxy) propyltrimethoxysilane. Here, there are no particular restrictions on the added amount of the coupling agent used in performing surface treatment; and a surface treatment method.

The aforementioned mold release agent is added to increase a mold releasability from a mold, and all known mold release agents may be used. Examples of such mold release agent include a carnauba wax, a rice bran wax, a candelilla wax, polyethylene, oxidized polyethylene, polypropylene, montanic acid, stearic acid, stearic acid ester, stearic acid amide, and a montan wax which is an ester compound made by combining montanic acid with a saturated alcohol mixture, 2-(2-hydroxyethylamino)ethanol, ethylene glycol or glycerin.

The above flame retardant is added to impart a flame retardance. There are no particular restrictions on such flame retardant, and any known flame retardant may be used. Examples of the flame retardant include a phosphazene compound, a silicone compound, a zinc molybdate-supported talc, a zinc molybdate-supported zinc oxide, an aluminum hydroxide, a magnesium hydroxide and a molybdenum oxide.

The ion trapping agent is added to trap the ion impurities contained in the resin composition, and avoid a thermal degradation and a moisture absorption degradation. While there are no particular restrictions on such ion trapping agent; and any known ion trapping agent may be used, examples of such ion trapping agent include hydrotalcites, a bismuth hydroxide compound and rare-earth oxides.

The added amount of the component (E) varies depending on the intended use of the heat-curable resin composition of the present invention. However, the component (E) is normally added in an amount of not larger than 98% by mass with respect to the whole composition.

### Production method of heat-curable epoxy resin composition

The heat-curable resin composition of the present invention can, for example, be produced by the following method.

For example, a mixture of the components (A) to (C) can be obtained by simultaneously or separately mixing, stirring, melting and/or dispersing the epoxy resin (A), the carboxyl group-free curing agent (B) and the annular carbodiimide compound (C) while performing a heating treatment if necessary. Further, a mixture of the components (A) to (D) may also be obtained by adding the curing accelerator (D) to the mixture of the components (A) to (C), and then stirring, melting and/or dispersing the same. Moreover, at least one of the inorganic filler, mold release agent, flame retardant and ion trapping agent as the other additives (E) may be added to and mixed with either the mixture of the components (A) to (C) or the mixture of the components (A) to (D), depending on the intended use. Each of the components (A) to (E) may be used singularly, or two or more of these components may be used in combination.

There are no particular restrictions on a production method of the composition and a device(s) for performing mixing, stirring and dispersion. However, specific examples of such device(s) include a kneader equipped with a stirring and heating devices, a twin-roll mill, a triple-roll mill, a ball mill, a planetary mixer and a mass-colloider. These devices can also be appropriately used in combination.

### Molding method

Transfer molding and compression molding can, for example, be employed as the molding methods for producing a semiconductor device or the like using the heat-curable epoxy resin composition of the present invention. If performing transfer molding, a transfer molding machine is used to perform transfer molding under a molding pressure of 5 to 20 N/mm², at a molding temperature of 120 to 190°C and for a molding time of 30 to 500 sec, preferably at a molding temperature of 150 to 185°C for a molding time of 30 to 180 sec. Further, if performing compression molding, a compression molding machine is used to perform compression molding at a molding temperature of 120 to 190°C for a molding time of 30 to 600 sec, preferably at a molding temperature of 130 to 160°C for a molding time of 120 to 300 sec. Furthermore, when performing either transfer molding or compression molding, post curing may also be performed at 150 to 185°C for 0.5 to 20 hours.

### [Working example]

The present invention is described in greater detail hereunder with reference to working and comparative examples. However, the invention is not limited to the following working examples. In working examples 1 to 30 and comparative examples 1 to 13, heat-curable epoxy resin compositions were prepared by combining the following components in accordance with the amounts shown in Tables 1 to 3. In Tables 1 to 3, the amounts of the components (A) to (E) refer to parts by mass.

(A) Epoxy resin
   (A1) Epoxy resin: Bisphenol A-type epoxy resin (YD-8125 by Mitsubishi Chemical Corporation)
   (A2) Epoxy resin: Naphthalene type epoxy resin (HP4032D by DIC Corporation)
   (A3) Epoxy resin: Trifunctional epoxy resin (EP630 by Mitsubishi Chemical Corporation)
   (A4) Epoxy resin: Biphenyl type epoxy resin (YX4000HK by Mitsubishi Chemical Corporation)
   (A5) Epoxy resin: Ortho-cresol novolac type epoxy resin (EOCN-1020-80 by Nippon Kayaku Co., Ltd.)
   (A6) Epoxy resin: Multifunctional epoxy resin (EPPN501: Nippon Kayaku Co., Ltd.)
   (A7) Epoxy resin: Biphenyl aralkyl type epoxy resin (NC3000 by Nippon Kayaku Co., Ltd.)
(B) Carboxyl group-free curing agent
   (B1) Carboxyl group-free curing agent: Allyl phenol-type phenolic resin (MEH-8000H by MEIWA PLASTIC INDUSTRIES, LTD.)
   (B2) Carboxyl group-free curing agent: Resorcinol-type phenolic resin (MEH-8400 by MEIWA PLASTIC INDUSTRIES, LTD.)
   (B3) Carboxyl group-free curing agent: Novolac-type phenolic resin (TD-2131 by DIC Corporation)
   (B4) Carboxyl group-free curing agent: Triphenol alkane-type phenolic resin (MEH7500 by MEIWA PLASTIC INDUSTRIES, LTD.)
   (B5) Carboxyl group-free curing agent: Biphenyl aralkyl-type phenolic resin (MEH7851SS by MEIWA PLASTIC INDUSTRIES, LTD.)
   (B6) Carboxyl group-free curing agent: Acid anhydride curing agent (RIKACID MH by New Japan Chemical Co., Ltd.)
   (B7) Carboxyl group-free curing agent: 3,3'-diethyl-4,4'-diaminodiphenylmethane (KAYAHARD AA by Nippon Kayaku Co., Ltd.)
   (B8) Carboxyl group-containing curing agent: salicylic acid (Tokyo Chemical Industry Co., Ltd.)
(C) (Annular) Carbodiimide compound
   (C1) Annular carbodiimide compound (TCC by TEIJIN LIMITED, carbodiimide equivalent 256.4)
   (C2) Non-annular carbodiimide compound 1: V-05 (by Nisshinbo Holdings Inc.)
   (C3) Non-annular carbodiimide compound 2: 10M-SP (by Nisshinbo Holdings Inc.)
   (C4) Bismaleimide compound: 4,4'-diphenylmethane bismaleimide (by K-I Chemical Industry Co., LTD.)
(D) Curing accelerator
   (D1) Curing accelerator: 2-ethyl-4-methylimidazole (by SHIKOKU CHEMICALS CORPORATION.)
   (D2) Curing accelerator: Triphenylphosphine (by HOKKO CHEMICAL INDUSTRY CO., LTD.)
(E) Other additives
   (E1) Molten silica: Molten spherical silica with an average particle diameter of 14 µm (by TATSUMORI LTD.)
   (E2) Silane coupling agent: γ-glycidoxypropyltrimethoxysilane (KBM-403 by Shin-Etsu Chemical Co., Ltd.)

### Evaluation

The following evaluation methods were used to run tests on the compositions obtained and the cured products thereof. The results of these tests (e.g. viscosity, glass-transition temperature, coefficient of thermal expansion (CTE1), adhesion, water absorption rate and bending strength) are shown in Tables 1 and 2 (Working examples); and Table 3 (Comparative examples).

### Viscosity measurement

As for working examples 1 to 24; and comparative examples 1 to 10, 12 and 13, the compositions obtained were in liquid form at 25°C. For this reason, a viscosity value of each sample was measured 2 min after placing the same, using an E-type viscometer at a measurement temperature of 25°C and in accordance with JIS Z8803:2011.

As for working examples 25 to 30; and comparative example 11, the compositions obtained were in solid form at 25°C and were able to soften and melt when heated. For this reason, a minimum melt viscosity was obtained after performing measurement at 175°C under a load of 98 N, using a Koka-type flow tester (by Shimadzu Corporation) and employing a 1 mm φ × 10 mm die.

### Preparation of cured product sample

Specimens of working examples 1 to 30 and comparative examples 1 to 13 were prepared as follows.

As for working examples 1 to 24; and comparative examples 1 to 10, 12 and 13, the compositions prior to curing were in liquid form at 25°C. Therefore, each of these heat-curable epoxy resin compositions was molded at 120°C for an hour, and then at 165°C for another two hours, thus obtaining the specimens to be subjected to the following tests.

As for working examples 25 to 30; and comparative example 11, the compositions prior to curing were in solid form at 25°C. Therefore, each of these heat-curable epoxy resin compositions was molded at 175°C and under a pressure of 6.9 N/mm² for 60 sec, followed by post-curing the same at 180°C for 4 hours so as to obtain the specimens to be subjected to the following tests.

### Measurement of glass-transition temperature (Tg)

Each of the cured products prepared in the working and comparative examples was processed into a 5 × 5 × 15 mm specimen, followed by placing the same in a thermal dilatometer TMA 8140C (by Rigaku Corporation). After setting a temperature program to a rise rate of 5°C / min and arranging that a constant load of 19.6 mN be applied to the specimen, a change in size of the specimen was then measured during a period from 25°C to 300°C. The correlation between such change in size and the temperatures was then plotted on a graph. The glass-transition temperatures in the working and comparative examples were later obtained based on such graph showing the correlation between the change in size and the temperatures, and through the following method for determining the glass-transition temperature(s). The results are shown in Tables 1 to 3.

### Determination method of glass-transition temperature

In FIG.1, T₁ and T₂ represent two arbitrary temperatures that are not higher than the temperature at the inflection point and by which a tangent line to the size change-temperature curve can be drawn; whereas T₁' and T₂' represent two arbitrary temperatures that are not lower than the temperature at the inflection point and by which a similar tangent line can be drawn. D₁ and D₂ individually represent a change in size at T₁ and a change in size at T₂; whereas D₁' and D₂' individually represent a change in size at T₁' and a change in size at T₂'. The glass-transition temperature (Tg) is then defined as the temperature at the point of intersection between a straight line connecting points (T₁, D₁) and (T₂, D₂) and a straight line connecting points (T₁', D₁') and (T₂', D₂').

### Calculation of coefficient of thermal expansion (CTE1)

A coefficient of thermal expansion was calculated based on the measurement data showing the correlation between the change in size of the specimen and the temperatures, which had been obtained at the time of measuring the glass-transition temperature.

### Measurement of adhesion force

A specimen for an adhesion test was prepared under the above curing conditions, using a 10 × 10 mm Cu lead frame. A bond tester DAGE-SERIES-4000PXY (by Nordson DAGE) was used to measure a shear adhesive force of the specimen at room temperature (25°C). Here, an adhesion area between the specimen of the flame and the resin was 10 mm².

### Measurement of water absorption rate

A 50 × 3 mm diameter disk that had been prepared under the above curing conditions was exposed to a saturated water vapor of 2.03 × 10⁵ Pa at 121°C in a pressure cooker for 96 hours. A rate of increase in the weight of such disk was considered as a water absorption rate.

### Measurement of bending strength

A bending strength of a cured product prepared under the above curing conditions was measured in accordance with JIS K6911:2006.

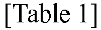

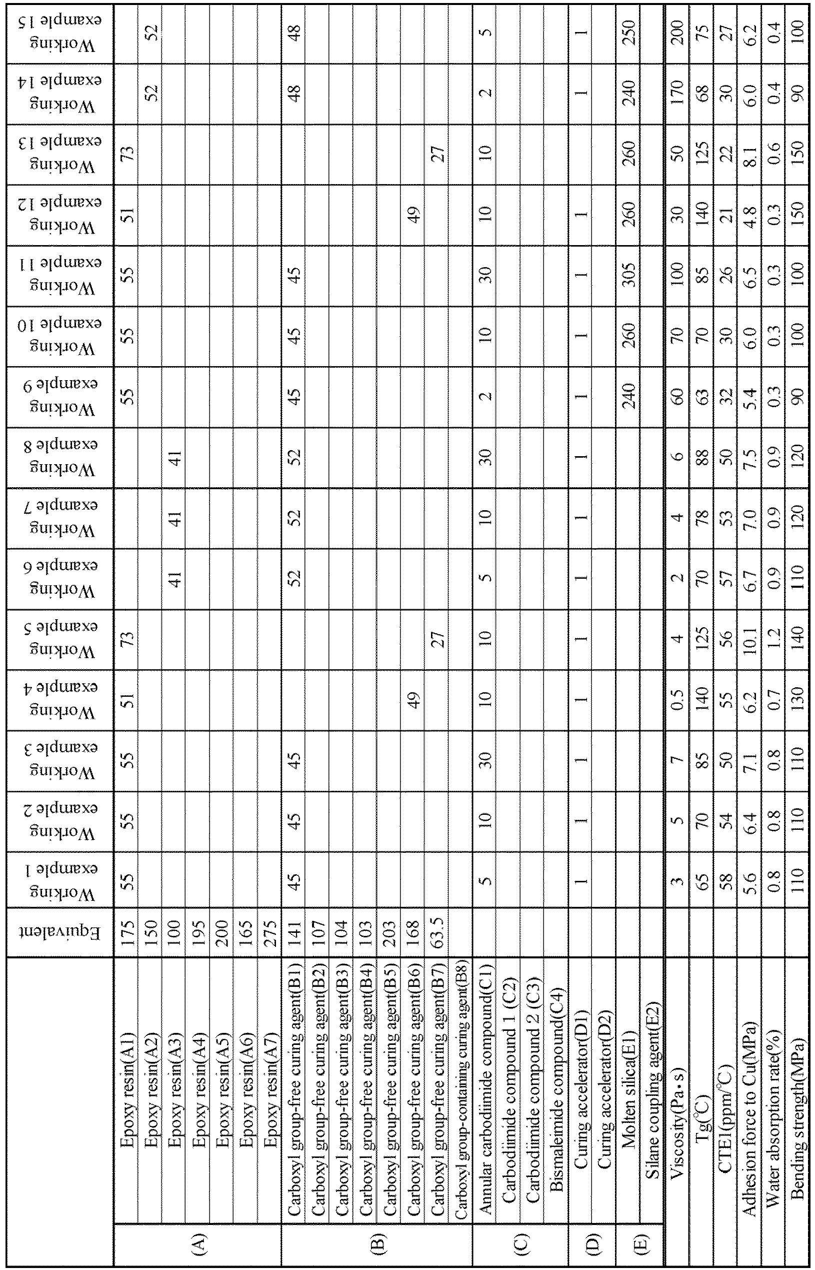

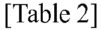

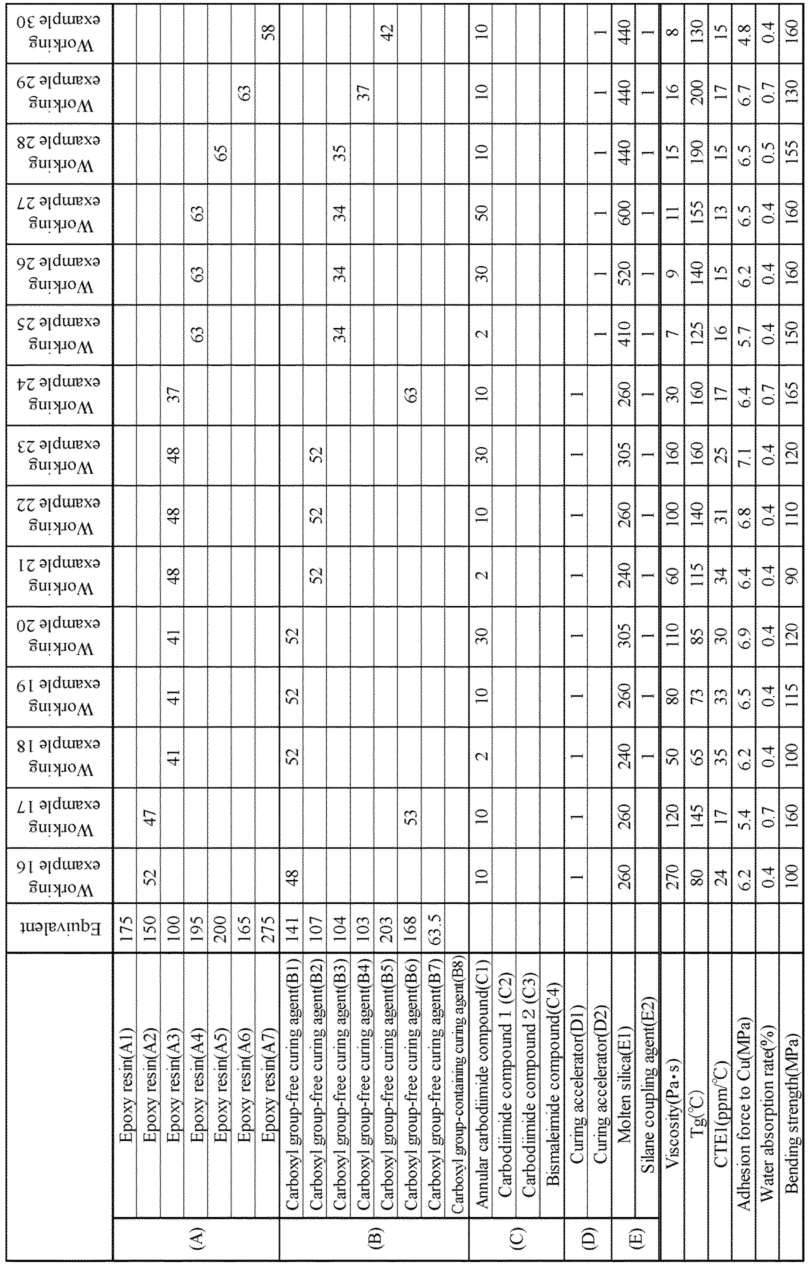

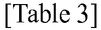

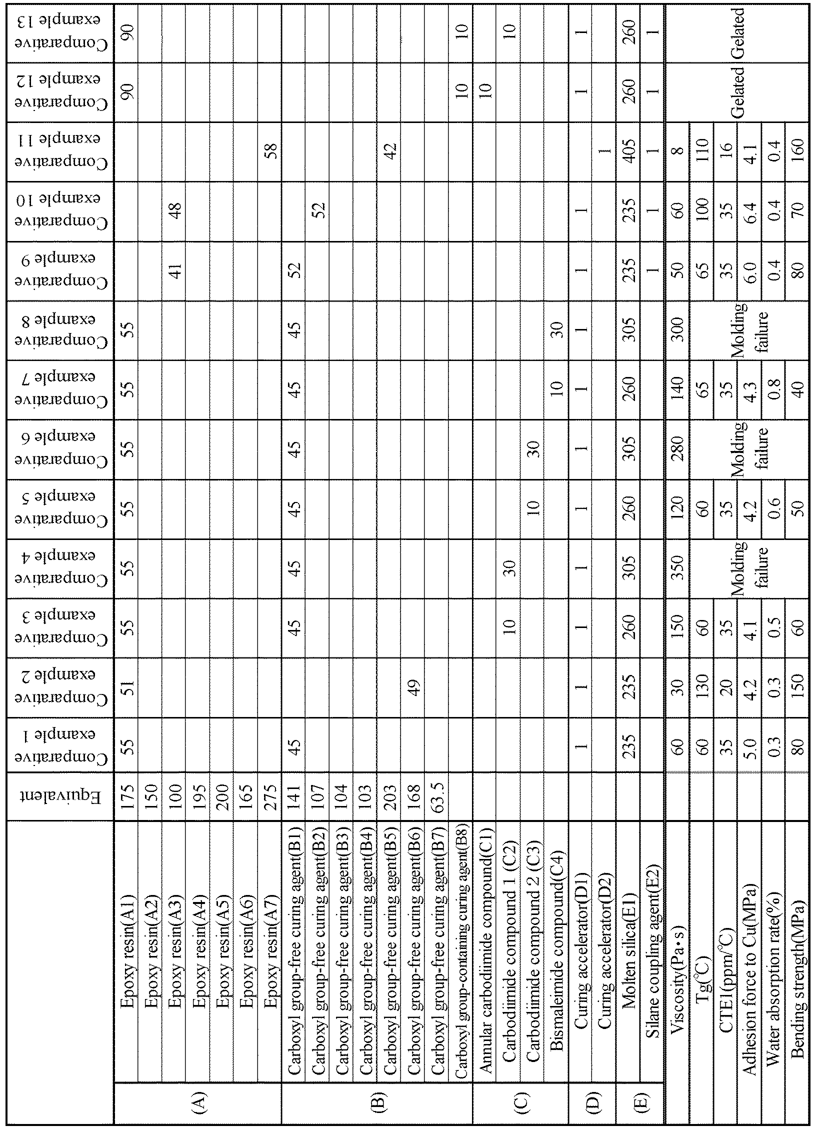

It became apparent that the heat-curable epoxy resin composition of the invention which contains the epoxy resin(s), the carboxyl group-free curing agent and the annular carbodiimide compound possessed a superior workability; and that the cured product thereof exhibited a thermal expansion resistance, a heat resistance, an adhesiveness and a low water absorbability.

## Claims

1. A heat-curable epoxy resin composition comprising:
(A) an epoxy resin;
(B) a carboxyl group-free curing agent; and
(C) an annular carbodiimide compound, **characterized in that**
an equivalent ratio of said carboxyl group-free curing agent (B) to said epoxy resin (A) is 0.5 to 1.5, and said annular carbodiimide compound (C) is in an amount of 2 to 50 parts by mass with respect to a total of 100 parts by mass of said epoxy resin (A) and said carboxyl group-free curing agent (B).

2. The heat-curable epoxy resin composition according to claim 1, **characterized in that** said component (B) is a phenol-based curing agent.

3. The heat-curable epoxy resin composition according to claim 1 or claim 2, further comprising a curing accelerator (D).

4. The heat-curable epoxy resin composition according to any one of claims 1 to 3, **characterized in that** said heat-curable epoxy resin composition is in liquid form.

## Patentansprüche

1. Wärmehärtbare Epoxidharzzusammensetzung, umfassend:
(A) ein Epoxidharz;
(B) ein carboxylgruppenfreies Härtungsmittel; und
(C) eine ringförmige Carbodiimidverbindung, **dadurch gekennzeichnet, dass**
ein Äquivalentverhältnis des carboxylgruppenfreien Härtungsmittels (B) zum Epoxidharz (A) 0,5 bis 1,5 beträgt und die ringförmige Carbodümidverbindung (C) in einer Menge von 2 bis 50 Massenteilen bezüglich einer Gesamtheit von 100 Massenteilen des Epoxidharzes (A) und des carboxylgruppenfreien Härtungsmittels (B) vorliegt.

2. Wärmehärtbare Epoxidharzzusammensetzung nach Anspruch 1, **dadurch gekennzeichnet, dass** die Komponente (B) ein Härtungsmittel auf Phenolbasis ist.

3. Wärmehärtbare Epoxidharzzusammensetzung nach Anspruch 1 oder Anspruch 2, ferner umfassend einen Härtungsbeschleuniger (D).

4. Wärmehärtbare Epoxidharzzusammensetzung nach einem der Ansprüche 1 bis 3, **dadurch gekennzeichnet, dass** die wärmehärtbare Epoxidharzzusammensetzung in flüssiger Form vorliegt.

## Revendications

1. Composition de résine époxy thermodurcissable, comprenant
(A) une résine époxy;
(B) un agent de durcissement sans groupe carboxyle; et
(C) un composé carbodiimide annulaire, **caractérisée en ce que**
un rapport équivalent dudit agent de durcissement sans groupe carboxyle (B) à ladite résine époxy (A) est de 0,5 à 1,5, et ledit composé carbodiimide annulaire (C) est en une quantité de 2 à 50 parties en masse par rapport à un total de 100 parties en masse de ladite résine époxy (A) et dudit agent de durcissement sans groupe carboxyle (B).

2. Composition de résine époxy thermodurcissable selon la revendication 1, **caractérisée en ce que** ledit composant (B) est un agent de durcissement à base de phénol.

3. Composition de résine époxy thermodurcissable selon la revendication 1 ou la revendication 2, comprenant en outre un accélérateur de durcissement (D).

4. Composition de résine époxy thermodurcissable selon l'une quelconque des revendications 1 à 3, **caractérisée en ce que** ladite composition de résine époxy thermodurcissable est sous forme liquide.
